# EUROPÄISCHE PATENTSCHRIFT

(11) **EP 4 320 489 B1**
(45) Veröffentlichungstag und Bekanntmachung des Hinweises auf die Patenterteilung: **21.01.2026**
(21) Anmeldenummer: 22717170.9
(22) Anmeldetag: 23.03.2022
(51) Int. Cl.: G05B 17/02, G06N 3/08

(54) **OPTIMIERUNGSVERFAHREN FÜR DEN BETRIEB VON ANLAGEN DER GRUNDSTOFFINDUSTRIE**
OPTIMIZATION METHOD FOR THE OPERATION OF SYSTEMS IN THE RAW MATERIALS INDUSTRY
PROCÉDÉ D'OPTIMISATION POUR LE FONCTIONNEMENT DES INSTALLATIONS DE L'INDUSTRIE DE BASE

(30) Priorität: 09.04.2021 EP 21167621
(43) Veröffentlichungstag der Anmeldung: 14.02.2024
(73) Patentinhaber: Primetals Technologies Austria GmbH, 4031 Linz (AT)
(72) Erfinder: SATTLER, Manuel, 4600 Wels (AT); HOHENBICHLER, Gerald, 4020 Linz (AT); KRADEL, Benjamin, 66914 Waldmohr (DE); STRASSER, Sonja, 4451 Garsten (AT)
(74) Vertreter: Metals@Linz
(86) Internationale Anmeldenummer: PCT/EP2022/057639
(87) Internationale Veröffentlichungsnummer: WO 2022/214317

(56) Entgegenhaltungen:
- KANSHA Y ET AL: "Adaptive generalized predictive control based on JITL technique", JOURNAL OF PROCESS CONTROL, OXFORD, GB, vol. 19, no. 7, 1 July 2009 (2009-07-01), pages 1067 - 1072, XP026158858, ISSN: 0959-1524, [retrieved on 20090509], DOI: 10.1016/J.JPROCONT.2009.04.002
- STRASSER S ET AL: "Artificial Intelligence Services in Steel Production -- On Premises and in the Cloud", INTERNET, vol. 3, 1 January 2020 (2020-01-01), pages 1936 - 1944, XP009529677, ISBN: 978-1-935117-87-2, Retrieved from the Internet <URL:http://digital.library.aist.org/pages/PR-380-209.htm>
- TATIPALA SRAVAN ET AL: "A Hybrid Data-Based and Model-Based Approach to Process Monitoring and Control in Sheet Metal Forming", PROCESSES, vol. 8, no. 1, 9 January 2020 (2020-01-09), pages 89, XP055835597, DOI: 10.3390/pr8010089

## Beschreibung

### Gebiet der Technik

Die vorliegende Erfindung geht aus von einem von einem Rechner ausgeführten Optimierungsverfahren für den Betrieb einer Anlage der Grundstoffindustrie, insbesondere einer Anlage der Stahl- oder Aluminiumindustrie, mittels derer zyklisch immer wieder ein technischer Prozess ausgeführt wird. Bei der Anlage der Grundstoffindustrie kann es sich beispielsweise um ein Stahlwerk oder ein Walzwerk oder einen Teil eines Stahlwerks bzw. eines Walzwerks handeln.

Die vorliegende Erfindung geht weiterhin aus von einem Computerprogramm, das Maschinencode umfasst, der von einem Rechner abarbeitbar ist, wobei die Abarbeitung des Maschinencodes durch den Rechner bewirkt, dass der Rechner ein derartiges Optimierungsverfahren ausführt.

Die vorliegende Erfindung geht weiterhin aus von einem Rechner, der mit einem derartigen Computerprogramm programmiert ist, so dass er im Betrieb ein derartiges Optimierungsverfahren ausführt.

### Stand der Technik

Aus dem Fachaufsatz "Data Analytics for Manufacturing Systems - A Data Driven Approach for Process Optimization" von Florian Ungermann et al., Proceedings 52nd CIRP Conference on Manufacturing Systems (2019), Seiten 369 bis 374, ist die statistische und mathematische Analyse von Daten bekannt, um das Erreichen von Schlüssel-Zielen bei Prozessen zu optimieren.

Aus dem Fachaufsatz "Adaptive generalized predictive control based on JITL technique" von Yasuki Kansha et al., Journal of Process Control 19 (2009), Seiten 1067 bis 1072, ist ein von einem Rechner ausgeführtes Optimierungsverfahren für eine Anlage bekannt, mittels derer zyklisch immer wieder ein technischer Prozess ausgeführt wird. Bei dem Optimierungsverfahren ermittelt der Rechner anhand vorgegebener Referenzwerte für Zielgrößen des technischen Prozesses unter Verwertung eines Modells der Anlage und des technischen Prozesses Erwartungswerte für Istgrößen des technischen Prozesses, so dass die Zielgrößen die Referenzwerte so weit wie möglich erreichen. Sodann wählt der Rechner aus einer Vielzahl von dem Rechner bekannten Datensätzen, die für jeweils einen einzelnen Zyklus des technischen Prozesses die Zielgrößen und die Istgrößen umfassen, gemäß einem vorbestimmten Abstandskriterium eine Anzahl von Datensätzen aus, bei denen die Istgrößen einen möglichst geringen Abstand zu den Erwartungswerten aufweisen. Anhand der ausgewählten Datensätze ermittelt der Rechner für einen noch auszuführenden Zyklus des technischen Prozesses Sollwerte, so dass die Zielgrößen die Referenzwerte so weit wie möglich erreichen. Die ermittelten Sollwerte gibt der Rechner an eine Bedienperson oder eine Steuereinrichtung der Anlage aus. Bei der Anlage handelt es sich um eine Anlage der Chemieindustrie.

Aus dem Fachaufsatz "Artificial Intelligence Services in Steel Production - On Premises and in the Cloud" von Sonja Strasser et al., AISTech 2020 - Proceedings of the Iron and Steel Technology Conference (2019), Seiten 1936 bis 1944, und aus dem Fachaufsatz "A Hybrid Data-Based and Model-Based Approach to Process Monitoring and Control in Sheet Metal Forming" von Sravan Tatipala et al., Processes 2020, Band 8, Seiten 89 bis 99, sind Vorgehensweisen bekannt, um auf automatisierte Weise qualitativ hochwertige Sollwerte für den Betrieb einer Anlage zu ermitteln, mittels derer zyklisch immer wieder ein technischer Prozess ausgeführt wird. Bei diesen Anlagen handelt es sich um Anlagen der Stahl- oder Aluminiumindustrie.

### Zusammenfassung der Erfindung

Die Performanz von zyklisch ausgeführten Prozessen der Grundstoffindustrie, insbesondere von Prozessen in der Stahlindustrie, beispielsweise bei der Eisenverhüttung, der Stahlerzeugung, dem Gießen und dem Walzen von Metall - insbesondere Stahl oder Aluminium - ist trotz vermeintlich identischer Prozessführung fast nie gleichbleibend. Oftmals können sogar erhebliche Abweichungen von Zyklus zu Zyklus auftreten. Dadurch ergeben sich oftmals auch erhebliche Abweichungen beim Erreichen der Schlüssel-Ziele (KPI = Key Performance Targets oder Key Performance Indicator). Typische Beispiele derartiger Schlüssel-Ziele sind die Maximierung der Produktivität, die Optimierung der Qualität des erzeugten Produkts, die Minimierung der Prozesskosten, die Minimierung des Energiebedarfs je Einheit (beispielsweise pro Tonne an Material) und andere mehr. Weiterhin ist die Performanz auch sehr stark von der Betriebsweise der Anlage abhängig, beispielsweise von der Menge und Art an Eingangsstoffen (beispielsweise bei der Stahlherstellung von deren chemischer Zusammensetzung und beim Walzen von den Eingangsabmessungen und der Temperaturverteilung), von der Prozessführung und auch vom Anlagen- und Wartungszustand (beispielsweise Verschleiß und ausgefallene Teilkomponenten der Anlage).

Beim Versuch der Prozessoptimierung muss der Experte und Prozessingenieur laufend viele Parameter und Einflussgrößen beachten. Manche der Einflussgrößen sind hierbei gegenläufig, bewirken also einander entgegengesetzte Folgen. Eine derartige Multidimensionalität der Optimierungsaufgabe kann zu einer teilweisen oder völligen Überforderung auch eines Experten führen, so dass oftmals nur ein suboptimaler Betrieb der Anlage der Grundstoffindustrie erreicht wird.

Die Aufgabe der vorliegenden Erfindung besteht darin, Möglichkeiten zu schaffen, mittels derer auf effiziente Weise ein optimaler oder zumindest nahezu optimaler Betrieb der Anlage der Grundstoffindustrie erreicht werden kann.

Die Aufgabe wird durch ein Optimierungsverfahren mit den Merkmalen des Anspruchs 1 gelöst. Vorteilhafte Ausgestaltungen des Optimierungsverfahrens sind Gegenstand der abhängigen Ansprüche 2 bis 6.

Erfindungsgemäß wird ein von einem Rechner ausgeführtes Optimierungsverfahren für den Betrieb einer Anlage der Grundstoffindustrie, insbesondere einer Anlage der Stahl- oder Aluminiumindustrie, geschaffen, wobei mittels der Anlage der Grundstoffindustrie zyklisch immer wieder ein technischer Prozess ausgeführt wird. Im Rahmen dieses Optimierungsverfahrens ist vorgesehen,
a) dass der Rechner anhand vorgegebener Referenzwerte für erste Zielgrößen des technischen Prozesses unter Verwertung eines Modells der Anlage und des technischen Prozesses erste Erwartungswerte für erste Istgrößen des technischen Prozesses ermittelt, so dass die ersten Zielgrößen die Referenzwerte so weit wie möglich erreichen,
b) dass der Rechner aus einer Vielzahl von dem Rechner bekannten Datensätzen, die für jeweils einen einzelnen Zyklus des technischen Prozesses die ersten Zielgrößen und zweite Zielgrößen, die ersten Istgrößen und zweite Istgrößen umfassen, gemäß einem vorbestimmten ersten Abstandskriterium eine vorbestimmte erste Anzahl von Datensätzen vorläufig auswählt, bei denen die ersten Istgrößen einen möglichst geringen Abstand zu den ersten Erwartungswerten aufweisen,
c) dass die ersten Zielgrößen disjunkt zu den zweiten Zielgrößen und die ersten Istgrößen disjunkt zu den zweiten Istgrößen sind,
d) dass der Rechner anhand der vorgegebenen Referenzwerte für die ersten Zielgrößen und der ersten Erwartungswerte zweite Erwartungswerte für die zweiten Istgrößen ermittelt,
e) dass der Rechner aus den vorläufig ausgewählten Datensätzen eine vorbestimmte zweite Anzahl von Datensätzen endgültig auswählt, bei denen die ersten Istgrößen und die zweiten Istgrößen gemäß einem zweiten Abstandskriterium einen möglichst geringen Abstand zu den ersten und zweiten Erwartungswerten aufweisen,
f) dass der Rechner anhand der endgültig ausgewählten Datensätze für einen noch auszuführenden Zyklus des technischen Prozesses Sollwerte für die zweiten Zielgrößen ermittelt, so dass die ersten Zielgrößen die Referenzwerte so weit wie möglich erreichen, und
g) dass der Rechner die ermittelten Sollwerte an eine Bedienperson oder eine Steuereinrichtung der Anlage der Grundstoffindustrie ausgibt.

Die Anlage der Grundstoffindustrie kann, wie bereits erwähnt, insbesondere ein Stahlwerk, ein Walzwerk oder ein Teil einer derartigen Anlage sein.

In vielen Fällen wird mittels der Anlage der Grundstoffindustrie ein Batchprozess ausgeführt. In derartigen Fällen ist der Begriff "Zyklus" selbsterklärend. In manchen Fällen wird mittels der Anlage der Grundstoffindustrie aber auch ein kontinuierlicher oder quasi-kontinuierlicher Prozess ausgeführt. In diesem Fall ist unter dem Begriff "Zyklus", soweit es die Vergangenheit betrifft, jeder zeitlich zusammenhängende Abschnitt zu verstehen, für den ein Datensatz mit den entsprechenden Zielwerten und Istwerten vorhanden ist. Soweit es die Zukunft betrifft, ist unter dem Begriff ein zeitlich zusammenhängender Zeitabschnitt zu verstehen, für den die Referenzwerte und Sollwerte ermittelt werden.

In der Regel sind dem Rechner tausende, zehntausende oder sogar hunderttausende von Datensätzen der beschriebenen Art bekannt. Die Datensätze sind historische Datensätze. Sie beschreiben also jeweils die Art und Weise, auf welche die Anlage der Grundstoffindustrie bei einem bestimmten, in der Vergangenheit ausgeführten Zyklus betrieben wurde. Der Datenpool, also die Gesamtheit der Datensätze, kann statisch oder dynamisch sein. Wenn der Datenpool dynamisch ist, können zum einen neue Datensätze zu dem Datenpool hinzukommen und zum anderen alte Datensätze aus dem Datenpool wegfallen.

Zielgrößen des technischen Prozesses sind diejenigen Größen, die bei dem jeweiligen Zyklus des technischen Prozesses so gut wie möglich erreicht werden sollen. Wenn die Anlage ein Lichtbogenofen ist und der technische Prozess demzufolge ein Schmelzvorgang zum Schmelzen von Roheisen und/oder Schrott nebst nachfolgendem Refinement beispielsweise durch Frischen ist, so können die Zielgrößen beispielsweise die beim Schmelzen des Roheisens/Schrottes benötigte elektrische Energie oder die korrespondierenden Kosten, die Endtemperatur der erzeugten Schmelze, die chemische Zusammensetzung der erzeugten Schmelze, die Prozessdauer des jeweiligen Zyklus, der im jeweiligen Zyklus auftretende Verschleiß und andere mehr sein. Es kann sich um direkt erfassbare Größen (ein Beispiel: die Temperatur der Schmelze) oder um abgeleitete Größen (zwei Beispiele: der Quotient aus in einem Zyklus hergestellter Menge an Stahl dividiert durch die hierfür benötigte Zeit oder die pro Tonne an hergestelltem Stahl benötigte elektrische Energie) handeln.

Die Istgrößen des technischen Prozesses können vielfältiger Natur sein. Istgrößen können beispielsweise die Zustandsdaten der Anlage, mittels derer der technische Prozess ausgeführt wird, Eingangsmaterialien, Betriebszustände einschließlich deren Dauer oder deren Anfangs- und/oder Endzeitpunkt oder das Ergebnis des technischen Prozesses sein. Wenn die Anlage ein Lichtbogenofen ist und der technische Prozess demzufolge ein Schmelzvorgang zum Schmelzen von Roheisen/Schrott nebst nachfolgendem Refinement beispielsweise durch Frischen ist, so können die Istgrößen beispielsweise der Verschleißzustand des Lichtbogenofens (beispielsweise die Dicke der Ausmauerung oder der Elektrodenabbrand), die Menge (beispielsweise in Tonnen) und Art der dem Lichtbogenofen zugeführten Eingangsstoffe (Roheisen, Schrott, Zuschlagstoffe wie Kalk oder Dolomit, Sauerstoff usw.), die Zeitpunkte oder Zeitspannen, zu denen dem Lichtbogenofen die verschiedenen Eingangsstoffe zugeführt werden, die Temperatur der Schmelze als Funktion der Zeit und der benötigte Strom als Funktion der Zeit sein. Weitere Istgrößen können die mit den Zielgrößen korrespondierenden Istgrößen sein. Eine weitere mögliche Istgröße kann der Zeitpunkt der letzten Wartung oder Inspektion oder eine vergleichbare Größe wie beispielsweise die Anzahl an seit der letzten Wartung/Inspektion ausgeführten Zyklen sein. Zusätzlich zu diesen Level 2-Größen umfassen die Istgrößen - zumindest teilweise - auch die zeitlichen Verläufe der Level 1-Größen, also die zeitlichen Verläufe der Istgrößen und/oder Stellgrößen zumindest einiger der Regler der Anlage. Bei einem Lichtbogenofen können dies beispielsweise die Regler für Positionierung der Elektroden, die Elektrodenspannung und den Elektrodenstrom sein. Für einen bereits ausgeführten Zyklus des technischen Prozesses können die Istgrößen auch die Sollgrößen umfassen. Denn die Sollgrößen waren im Rahmen dieses bereits ausgeführten Zyklus rein faktisch vorgegeben. Einfaches Beispiel: Istgröße 1 eines Datensatzes = zeitlicher Verlauf des Istwertes der Elektrodenposition und Istgröße 2 desselben Datensatzes = zeitlicher Verlauf des Sollwertes der Elektrodenposition.

Es ist möglich, dass der Datensatz weiterhin auch Korrelationen von Zielgrößen und/oder Istgrößen miteinander umfasst. In diesem Fall können die Korrelationen von dem Rechner ermittelt werden. Entsprechende Vorgehensweisen sind Fachleuten allgemein bekannt. So kennt der Fachmann auf dem Gebiet der Datenanalytik beispielsweise sogenannte Heat-maps und partial dependence plots und auch Trendanalysen und Trendgraphen (bekannt aus der Datenanalytik und aus der Prozessautomatisierung). Alternativ ist es möglich, dass die Korrelationen anderweitig ermittelt werden und dem Rechner bei der Vorgabe der Datensätze mit vorgegeben werden. Auch andere Korrelationen können gegebenenfalls ermittelt werden.

Die ersten Istgrößen können nach Bedarf singuläre Größen und zeitliche Verläufe von Istgrößen umfassen. In der Regel handelt es sich bei den ersten Istgrößen um Level 2-Größen. Wenn also beispielsweise bei einem Lichtbogenofen als Referenzwert für eine der ersten Zielgrößen die benötigte elektrische Energie pro Tonne vorgegeben wird, können die ersten Istgrößen beispielsweise die Endtemperatur der Schmelze oder die Sollpositionierung der Elektroden als Funktion der Zeit sein oder umfassen. Hingegen handelt es sich in der Regel nicht um Level 1-Größen, also beispielsweise die Stellgrößen von Prozessreglern.

Die vorbestimmte erste Anzahl von Datensätzen kann nach Bedarf bestimmt sein. Oftmals liegt sie im zweistelligen oder niedrigen bis mittleren dreistelligen Bereich. Beispielsweise kann die vorbestimmte erste Anzahl zwischen 15 und 500 liegen. Bevorzugt sind Werte zwischen 15 und 200. Die vorbestimmte zweite Anzahl von Datensätzen ist kleiner als die erste Anzahl von Datensätzen. Oftmals liegt sie im mittleren bis oberen einstelligen Bereich, manchmal auch noch im niedrigen zweistelligen Bereich. Beispielsweise kann die vorbestimmte zweite Anzahl zwischen 5 und 20 liegen, insbesondere zwischen 5 und 10.

Die Ermittlung des möglichst geringen Abstands ist Fachleuten allgemein bekannt. Es kann auf die allgemein bekannten Algorithmen und Methoden zur sogenannten nähesten Nachbarschaft verwiesen werden.

Es ist möglich, dass die zweiten Zielgrößen komplementär zu den ersten Zielgrößen sind und/oder die zweiten Istgrößen komplementär zu den ersten Istgrößen sind. Dies ist aber nicht erforderlich. Sie müssen nur disjunkt zueinander sein.

Der Begriff "Erwartungswert" ist nicht in dem Sinne gemeint, wie er im Fachgebiet Statistik und Wahrscheinlichkeitsrechnung verwendet wird. Bezüglich der ersten Erwartungswerte ist der Begriff vielmehr in dem Sinne gemeint, dass der entsprechende Wert angestrebt oder eingestellt werden muss, um die ersten Zielgrößen auf die Referenzwerte einstellen zu können. Bezüglich der zweiten Istgrößen gilt in analoger Weise, dass der entsprechende Wert angestrebt oder eingestellt werden muss, um die Zielgrößen auf die Referenzwerte und die ersten Istgrößen auf die ersten Erwartungswerte einstellen zu können.

Es ist möglich, dass die Referenzwerte dem Rechner fest vorgegeben sind. Vorzugsweise nimmt der Rechner die Referenzwerte jedoch von der Bedienperson entgegen. Dadurch kann insbesondere eine flexible Betriebsweise des Optimierungsverfahrens erfolgen.

Insbesondere kann vorgesehen sein, dass der Rechner zunächst von der Bedienperson eine Auswahl der ersten Zielgrößen als solche entgegennimmt und erst danach von der Bedienperson die Referenzwerte für die ersten Zielgrößen entgegennimmt. Dadurch ist das Optimierungsverfahren sehr flexibel einsetzbar.

Vorzugsweise ermittelt der Rechner zwischen dem Entgegennehmen der Auswahl der ersten Zielgrößen als solche und dem Entgegennehmen der Referenzwerte für die ersten Zielgrößen anhand der Datensätze auftretende Wertebereiche für die ersten Zielgrößen gibt und die auftretenden Wertebereiche an die Bedienperson aus. Dadurch wird die Vorgabe "sinnvoller" Referenzwerte für die Bedienperson erleichtert.

Im Rahmen der Ermittlung der auftretenden Wertebereiche ist es möglich, dass der Rechner nicht die vollständigen auftretenden Wertebereiche an die Bedienperson ausgibt, sondern die größten und die kleinsten Werte unberücksichtigt lässt. Beispielsweise kann der Rechner die größten 5 % und/oder die kleinsten 5 % an Werten ausschließen oder zwar die vollständigen auftretenden Wertebereiche ausgeben, die größten 5 % und/oder die kleinsten 5 % jedoch als solche kennzeichnen. Anstelle des Wertes von 5 % ist selbst verständlich auch ein anderer Zahlenwert möglich, beispielsweise 2 %. Es ist auch möglich, dass der genannte Zahlenwert - beispielsweise 5 % oder 2 % - als solcher dem Rechner von der Bedienperson vorgegeben wird.

Vorzugsweise gibt der Rechner zumindest die ersten Istgrößen der ersten Anzahl von Datensätzen an die Bedienperson aus und eliminiert aufgrund von darauf aufbauenden Vorgaben der Bedienperson aus der ersten Anzahl von Datensätzen einzelne Datensätze, so dass die eliminierten Datensätze bei der Ermittlung der endgültig ausgewählten Datensätze unberücksichtigt bleiben. Dadurch können insbesondere auf einfache Art und Weise Datensätze eliminiert werden, welche die Bedienperson aufgrund ihrer Fachkenntnis als unplausibel klassifiziert oder anderweitig als ungeeignet klassifiziert.

Vorzugsweise ist das Optimierungsverfahren weiterhin derart ausgestaltet, dass der Rechner nach der erstmaligen Ausführung des Schrittes e) erneut die Schritte b) bis e) ausführt. In diesem Fall legt der Rechner der erneuten Ausführung der Schritte b) bis e) als erste Erwartungswerte die ersten Istgrößen desjenigen Datensatzes der zweiten Anzahl an Datensätzen zu Grunde, die bei der bereits erfolgten Ausführung des Schrittes e) den geringsten Abstand zu den ersten Erwartungswerten aufgewiesen haben. Dadurch kann eine noch bessere Optimierung erfolgen.

Die Aufgabe wird weiterhin durch ein Computerprogramm mit den Merkmalen des Anspruchs 7 gelöst. Erfindungsgemäß bewirkt die Abarbeitung des Computerprogramms, dass der Rechner ein erfindungsgemäßes Optimierungsverfahren ausführt.

Die Aufgabe wird weiterhin durch einen Rechner mit den Merkmalen des Anspruchs 8 gelöst. Erfindungsgemäß ist der Rechner mit einem erfindungsgemäßen Computerprogramm programmiert, so dass der Rechner im Betrieb ein erfindungsgemäßes Optimierungsverfahren ausführt.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Anlage der Grundstoffindustrie und zugeordnete Komponenten,
- FIG 2: einen Datensatz und
- FIG 3 bis 5: Ablaufdiagramme.

### Beschreibung der Ausführungsformen

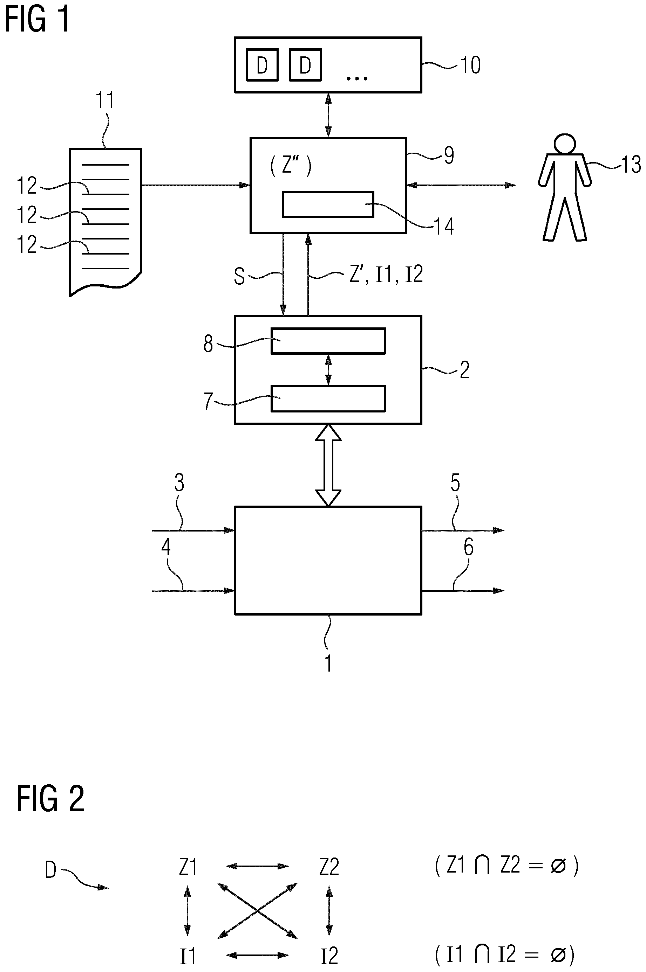

Gemäß FIG 1 wird eine Anlage 1 der Grundstoffindustrie von einer Steuereinrichtung 2 gesteuert. Unter Steuerung durch die Steuereinrichtung 2 wird mittels der Anlage 1 zyklisch immer wieder ein technischer Prozess ausgeführt. Im Rahmen eines einzelnen Zyklus, also einer in sich abgeschlossenen einmaligen Ausführung des technischen Prozesses, werden der Anlage 1 Eingangsstoffe 3 und Energie 4 zugeführt, wird ein (erwünschtes) Ausgangsprodukt 5 erzeugt und werden oftmals auch (unerwünschte) Nebenprodukte 6 erzeugt. Das Zuführen der Eingangsstoffe 3 und der Energie 4 unterliegt oftmals zeitlichen Schwankungen. Gleiches gilt für das Erzeugen des Ausgangsprodukts 5 und der Nebenprodukte 6.

Die Anlage 1 ist in der Regel eine Anlage der Stahlindustrie, in manchen Fällen auch der Aluminiumindustrie. Beispielsweise kann die Anlage 1 als Walzwerk ausgebildet sein, in dem immer wieder ein neues Walzgut (nicht dargestellt) gewalzt wird. In diesem Fall können Eingangsstoffe 3 beispielsweise ein noch ungewalztes Walzgut (= hauptsächlicher Eingangsstoff) und Wasser zum Kühlen des Walzguts und möglicherweise auch zum Entzundern des Walzguts sein. Die Energie 4 ist in diesem Fall in der Regel im wesentlichen elektrische Energie. Das erwünschte Ausgangsprodukt 5 ist das gewalzte Walzgut. Unerwünschte Nebenprodukte 6 können beispielsweise verunreinigtes Wasser und Wasserdampf sein.

Ebenso kann die Anlage 1 beispielsweise als Lichtbogenofen ausgebildet sein, in dem immer wieder eine neue Charge Stahl hergestellt wird. In diesem Fall können Eingangsstoffe 3 beispielsweise Roheisen, Schrott, Zuschlagstoffe wie beispielsweise Kalk oder Dolomit und (im Rahmen des Frischens) Sauerstoff sein. Die Eingangsstoffe 3 werden dem Lichtbogenofen zu bestimmten Zeitpunkten oder während bestimmter Zeiträume zugeführt. Energie 4 kann dem Lichtbogenofen hauptsächlich in Form elektrischer Energie, teilweise aber auch durch Verbrennen von fossilen Rohstoffen zugeführt werden. Das erwünschte Ausgangsprodukt 5 ist bei einem Lichtbogenofen die Charge Stahl. Sie steht erst am Ende des Prozesses zur Verfügung, dann aber auch vollständig. Unerwünschte Nebenprodukte 6 können insbesondere mit Schadstoffen belastete Abgase und Schlacke sein.

Die Anlage 1 kann auch als andere Anlage der Stahlindustrie bzw. der Aluminiumindustrie ausgebildet sein, beispielsweise als Stranggießanlage oder als kombinierte Gießwalzanlage.

Die Steuereinrichtung 2, welche die Anlage 1 steuert, umfasst in der Regel mehrere Steuerungsebenen. Zum einen umfasst die Steuereinrichtung 2 in der Regel Prozessregelungen 7, die in Echtzeit Steuereingriffe an der Anlage 1 vornehmen. Die Gesamtheit der Prozessregelungen 7 wird von Fachleuten üblicherweise als Level 1-System bezeichnet. Bei einem Lichtbogenofen werden beispielsweise die Betriebsspannung, mit der Elektroden des Lichtbogenofens betrieben werden, und die Position von Elektroden geregelt. Einem Walzwerk werden insbesondere die hydraulischen Anstellungen der Walzgerüste, die Walzgeschwindigkeiten, die Züge im Walzgut, die Beaufschlagung mit Kühlmittel und andere mehr geregelt. Zum anderen umfasst die Steuereinrichtung 2 eine übergeordnete technologische Prozesssteuerung 8, mittels derer unter anderem Basissollwerte für die Prozessregelungen 7 ermittelt werden, also diejenigen Sollwerte, mit denen die Anlage 1 bei völlig störungsfreiem, idealem Betrieb betrieben würde. Die übergeordnete technologische Prozesssteuerung 8 wird von Fachleuten üblicherweise als Level 2-System bezeichnet.

Die Steuereinrichtung 2 ist mit einem Rechner 9 verbunden. Alternativ kann der Rechner 9 auch mit der Steuereinrichtung 2 zu einer gemeinsamen Einheit zusammengefasst sein. Die Steuereinrichtung 2 übermittelt an den Rechner 9 eine Vielzahl an verschiedenen, in einem jeweiligen Zyklus des technischen Prozesses auftretenden Größen. Die übermittelten Größen umfassen zum einen Zielgrößen Z' und zum anderen erste und zweite Istgrößen I1, I2.

Die Zielgrößen Z' umfassen die technologischen Sollwerte, die der technologischen Prozesssteuerung 8 zugeführt werden. Die Zielgrößen Z' legen fest, welches Ausgangsprodukt 5 bei der jeweiligen Ausführung des technischen Prozesses mittels der Anlage 1 hergestellt werden soll. Die Zielgrößen Z' sind, bezogen auf den jeweiligen Zyklus, oftmals zeitunabhängig. Manchmal können sie aber auch zeitabhängig sein. Im Falle eines Walzwerks können die technologischen Sollwerte beispielsweise die Abmessungen des gewalzten Walzguts, dessen Temperatur nach dem Walzen (gegebenenfalls beim Haspeln), gewünschte makromechanische oder mikromechanische Eigenschaften und dergleichen mehr umfassen. Im Falle eines Lichtbogenofens können die technologischen Sollwerte beispielsweise die Temperatur und die chemische Zusammensetzung der erzeugten Schmelze umfassen. Die technologischen Sollwerte können gegebenenfalls auch Vorgaben für die unerwünschten Nebenprodukte 6 umfassen, beispielsweise aufgrund von gesetzlichen Vorgaben einzuhaltende Grenzwerte.

Auf Basis der technologischen Sollwerte und der Beschreibung der Eingangsstoffe 3 ermittelt die technologische Prozesssteuerung 8 die Basissollwerte für die Prozessregelungen 7. Die ersten Istgrößen I1 können insbesondere die Basissollwerte für die Prozessregelungen 7 als solche umfassen. Die zweiten Istgrößen I2 können beispielsweise die tatsächlichen Istwerte des technischen Prozesses umfassen, also die in der Anlage 1 auftretenden, den Prozessregelungen 7 zugeführten Istwerte. Weiterhin können die zweiten Istgrößen I2 die von den Prozessregelungen 7 an die Anlage 1 ausgegebenen Stellgrößen umfassen. Unabhängig von einer bestimmten Einstufung einer bestimmten Größe als erste oder zweite Istgröße I1, I2 sind die ersten Istgrößen jedoch disjunkt zu den zweiten Istgrößen I2. Sie können auch komplementär zueinander sein, sich also zu allen erfassten Istgrößen in ihrer Gesamtheit ergänzen. Weiterhin können sowohl die ersten als auch die zweiten Istgrößen I1, I2 zeitabhängig sein.

Unter Verwertung der Zielgrößen Z' sowie der ersten und zweiten Istgrößen I1, I2 und gegebenenfalls weiterer Informationen werden weitere Zielgrößen Z" ermittelt. Die weiteren Zielgrößen Z" können beispielsweise die zum Erzeugen einer (1) Tonne Ausgangsprodukt 5 erforderliche elektrische Energie oder Gesamtenergie und/oder die zum Erzeugen einer (1) Tonne Ausgangsprodukt 5 erforderlichen Kosten umfassen. Die Gesamtheit der erstgenannten Zielgrößen Z' und der weiteren Zielgrößen Z" wird nachstehend allgemein mit dem Begriff Zielgrößen Z bezeichnet. Die Ermittlung der weiteren Zielgrößen Z" kann - nicht aber muss - von dem Rechner 9 ausgeführt werden.

Sofern erforderlich, können unter Verwertung der Zielgrößen Z sowie der ersten und zweiten Istgrößen I1, I2 und gegebenenfalls der weiterer Informationen auch Korrelationen von Zielgrößen Z sowie Istgrößen I1, I2 miteinander ermittelt werden. Auch die Ermittlung der Korrelationen kann - nicht aber muss - von dem Rechner 9 ausgeführt werden.

Die Korrelationen können örtlicher, zeitlicher oder anderer Natur sein. Nachstehend werden einige einfache Beispiele von örtlichen und zeitlichen Korrelationen erläutert.

Im Falle einer Stranggießkokille ist über die Kaltseiten verteilt in einem zweidimensionalen Raster eine Vielzahl von Temperatursensoren angeordnet. Die Temperatursensoren dienen insbesondere dazu, einen Schalenhänger mit der daraus resultierenden Gefahr eines Kokillendurchbruchs rechtzeitig zu erkennen. Insbesondere örtliche Korrelationen von Zeit-Temperaturkurven, die mittels nebeneinander angeordneter Temperatursensoren erfasst werden, oder zeitlich versetzte Zeit-Temperaturkurven, die mittels untereinander angeordneter Temperatursensoren erfasst werden, können relevant sein.

Im Falle eines Lichtbogenofens besteht oftmals eine zeitliche Korrelation zwischen der Temperatur der Schmelze als Funktion der Zeit und dem Energieeintrag als Funktion der Zeit.

Bei einem Walzgerüst besteht oftmals eine Korrelation zwischen der Biegekraft, mittels derer die Arbeitswalzen eines Quartowalzgerüsts an dessen Stützwalzen angedrückt werden, und dem dadurch bewirkten Einfluss auf Profil und Planheit des Walzguts.

Die Gesamtheit an Zielgrößen Z und ersten und zweiten Istgrößen I1, I2 eines jeweiligen Zyklus (genauer: die jeweiligen Werte) - gegebenenfalls einschließlich der zugehörigen Korrelationen - bildet einen (1) Datensatz D. Ein einzelner Datensatz D ist exemplarisch in FIG 2 dargestellt.

Mit jedem Zyklus des technischen Prozesses fällt ein weiterer Datensatz D an. Im Laufe der Zeit kann dadurch ein Datenpool 10 gebildet werden, der eine Vielzahl derartiger Datensätze D enthält.

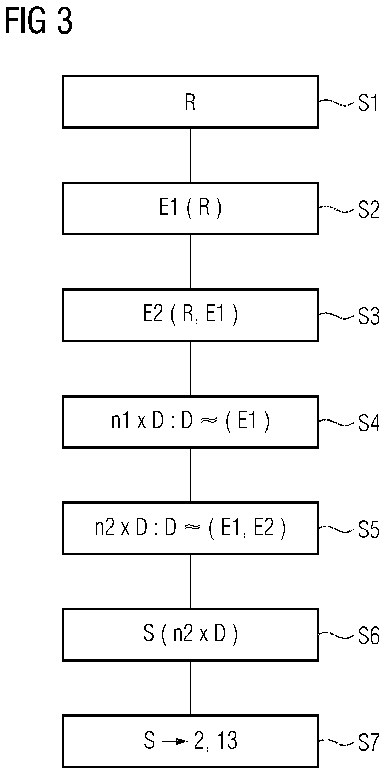

Mittels des Rechners 9 soll ein Optimierungsverfahren für den Betrieb der Anlage 1 ausgeführt werden. Zu diesem Zweck ist der Rechner 9 mit einem Computerprogramm 11 programmiert. Das Computerprogramm 11 umfasst Maschinencode 12, der von dem Rechner 9 abarbeitbar ist. Die Abarbeitung des Maschinencodes 12 durch den Rechner 9 bewirkt, dass der Rechner 9 das entsprechende Optimierungsverfahren ausführt. Das Optimierungsverfahren wird nachstehend in Verbindung mit FIG 3 näher erläutert. Hierbei wird vorausgesetzt, dass der Datenpool 10 bereits vorhanden ist, also eine Vielzahl von Datensätzen D enthält. Der Begriff "Vielzahl" ist in diesem Zusammenhang nicht im Sinne von "Mehrzahl" zu verstehen, also größer als 1. Vielmehr ist der Begriff im Sinne von weit, weit größer als 1 zu verstehen. Der Datenpool 10 enthält zumindest Hunderte von Datensätzen D. Oftmals enthält der Datenpool 10 sogar tausende, zehntausende oder eine noch größere Anzahl von Datensätzen D. Weiterhin hat der Rechner 9 Zugriff auf den Datenpool 10. Die Datensätze D sind ihm also bekannt.

Gemäß FIG 3 werden dem Rechner 9 in einem Schritt S1 Referenzwerte R für erste Zielgrößen Z1 des technischen Prozesses bekannt. Beispielsweise können die Referenzwerte R für die ersten Zielgrößen Z1 dem Rechner 9 fest vorgegeben sein. Oftmals werden sie dem Rechner 9 jedoch entsprechend der Darstellung in FIG 1 von einer Bedienperson 13 vorgegeben. Die ersten Zielgrößen Z1 bilden ein Subset der Zielgrößen Z. Es handelt sich bei den ersten Zielgrößen Z1 um die Schlüssel-Ziele (KPI), die beim Betrieb der Anlage 1 erreicht werden sollen. Im einfachsten Fall wird nur eine einzige erste Zielgröße Z1 vorgegeben. Es können aber auch mehrere erste Zielgrößen (in diesem Fall vorzugsweise mit ihrer jeweiligen Gewichtung) vorgegeben werden.

Um den Unterschied zwischen den Begriffen "Referenzwert" und "erste Zielgröße" zu erläutern, wird nachstehend ein Beispiel geliefert. Es wird aber darauf hingewiesen, dass dieses Beispiel nur ein Beispiel ist und ebenso für andere, analog gelagerte Sachverhalte gilt. Man nehme also beispielsweise an, eine bestimmte erste Zielgröße Z1 sei die zum Erzeugen einer bestimmten Menge an Stahl benötigte elektrische Energie. Dann bezeichnet die entsprechende erste Zielgröße Z1 als solche unabhängig vom konkreten Zahlenwert den Sachverhalt "zum Erzeugen einer bestimmten Menge an Stahl benötigte elektrische Energie". Der entsprechende Referenzwert R bezeichnet hingegen den konkreten Zahlenwert, beispielsweise "300 kWh/t".

In einem Schritt S2 ermittelt der Rechner 9 anhand der Referenzwerte R Erwartungswerte E1 für die ersten Istgrößen I1. Die Ermittlung umfasst gegebenenfalls auch Zeitpunkte und Zeiträume für welche die Erwartungswerte E1 gültig sind. Es handelt sich also nicht zwingend um rein skalare Werte. Vielmehr kann es sich auch um zeitliche Verläufe handeln. Der Rechner 9 ermittelt also die technologischen Sollwerte, die der technologischen Prozesssteuerung 8 zugeführt werden sollen, soweit sie nicht bereits durch die Referenzwerte R festgelegt sind. Die Erwartungswerte E1 werden nachfolgend als erste Erwartungswerte E1 bezeichnet, weil sie für die ersten Istgrößen I1 bestimmt werden.

Die Ermittlung der ersten Erwartungswerte E1 erfolgt unter Verwertung eines Modells 14, welches die Anlage 1 und den technischen Prozess beschreibt. Das Modell 14 beschreibt die Anlage 1 und den technischen Prozess oftmals aufgrund von mathematisch-physikalischen Gleichungen, wobei die Gleichungen algebraische und/oder Differenzialgleichungen umfassen. Es sind aber auch andere Modelle 14 denkbar, beispielsweise auf Basis von künstlicher Intelligenz. Unabhängig von der Art des Modells 14 erfolgt die Ermittlung der ersten Erwartungswerte E1 jedoch derart, dass die ersten Zielgrößen Z1 die Referenzwerte R so weit wie möglich erreichen. Soweit erforderlich, kann der Rechner 9 für die Implementierung des Schrittes S2 eine Kostenfunktion ansetzen, in welche die ersten Zielgrößen Z1 eingehen. Gegebenenfalls können zusätzlich auch Randbedingungen mit berücksichtigt werden. Das Aufstellen von Kostenfunktionen und deren Optimierung einschließlich des Beachtens von Randbedingungen sind Fachleuten allgemein bekannt.

In einem Schritt S3 ermittelt der Rechner 9 Erwartungswerte E2 für die zweiten Istgrößen I2. Der Rechner 9 führt also sozusagen eine Setup-Berechnung für einen geplanten Zyklus des technischen Prozesses durch, bei dem die Referenzwerte R erreicht werden sollen. Das Ergebnis der Setup-Berechnung sind die Erwartungswerte E2. Die Ermittlung des Schrittes S3 umfasst, soweit erforderlich, auch Zeitpunkte und Zeiträume, für welche die Erwartungswerte E2 gültig sind. Die Erwartungswerte E2 werden nachfolgend als zweite Erwartungswerte E2 bezeichnet, weil sie für die zweiten Istgrößen I2 ermittelt werden. Die Ermittlung des Schrittes S3 erfolgt wieder unter Verwertung des Modells 14. Sie erfolgt anhand der vorgegebenen Referenzwerte R für die ersten Zielgrößen Z1 und der im Schritt S2 ermittelten ersten Erwartungswerte E1.

In einem Schritt S4 wählt der Rechner 9 aus dem Datenpool 10 eine vorbestimmte erste Anzahl n1 von Datensätzen D aus. Diese Auswahl ist nur vorläufig. Konkret bestimmt der Rechner 9 im Schritt S4 zunächst für die Datensätze D gemäß einem vorbestimmten ersten Abstandskriterium einen ersten Abstand des jeweiligen Datensatzes D zu den ersten Erwartungswerten E1. Abstandskriterien sind Fachleuten allgemein bekannt. Es kann insbesondere die Methode "näheste Nachbarschaft" verwendet werden. Unabhängig vom konkret verwendeten ersten Abstandskriterium wählt der Rechner 9 im Schritt S4 sodann diejenigen Datensätze D aus, bei denen der erste Abstand möglichst gering ist. Es ergibt sich somit ein erster Grenzabstand (gemäß dem vorbestimmten ersten Abstandskriterium), wobei für alle vorläufig ausgewählten Datensätze D der jeweilige zugehörige erste Abstand maximal so groß wie der erste Grenzabstand ist, während für alle nicht vorläufig ausgewählten Datensätze D der jeweilige zugehörige erste Abstand mindestens so groß wie der erste Grenzabstand ist.

Zu den Schritten S3 und S4 kann noch angemerkt werden, dass sie auch in umgekehrter Reihenfolge ausgeführt werden können.

In einem Schritt S5 wählt der Rechner 9 eine vorbestimmte zweite Anzahl n2 von Datensätzen D aus. Diese Auswahl ist endgültig. Sie ist auf diejenigen Datensätze D beschränkt, die im Schritt S4 vorläufig ausgewählt wurden. Konkret bestimmt der Rechner 9 im Schritt S5 zunächst für die vorläufig ausgewählten Datensätze D gemäß einem vorbestimmten zweiten Abstandskriterium einen zweiten Abstand des jeweiligen Datensatzes D zu den ersten und zweiten Erwartungswerten E1, E2.

Auch hier sind Abstandskriterien Fachleuten allgemein bekannt. Es kann wie zuvor insbesondere die Methode "näheste Nachbarschaft" verwendet werden. Unabhängig vom konkret verwendeten zweiten Abstandskriterium wählt der Rechner 9 im Schritt S5 sodann diejenigen Datensätze D aus, bei denen der zweite Abstand möglichst gering ist. Es ergibt sich somit ein zweiter Grenzabstand (gemäß dem vorbestimmten zweiten Abstandskriterium), wobei für alle endgültig ausgewählten Datensätze D der jeweilige zugehörige zweite Abstand maximal so groß wie der zweite Grenzabstand ist, während für alle nicht endgültig ausgewählten Datensätze D der jeweilige zugehörige zweite Abstand mindestens so groß wie der zweite Grenzabstand ist.

In einem Schritt S6 ermittelt der Rechner 9 Sollwerte S für zweite Zielgrößen Z2. Die Sollwerte S sind für einen noch auszuführenden Zyklus des technischen Prozesses bestimmt. Das Verhältnis der Sollwerte S zu den zweiten Zielgrößen Z2 ist analog zum Verhältnis der Referenzwerte R zu den ersten Zielgrößen Z1. Die zweiten Zielgrößen Z2 sind also die Zielgrößen als solche, unabhängig vom konkreten Wert, während die Sollwerte S die korrespondierenden konkreten Werte sind. Der Rechner 9 ermittelt die Sollwerte S im Schritt S6 anhand der endgültig ausgewählten Datensätze D. Die Ermittlung erfolgt derart, dass die ersten Zielgrößen Z1 die Referenzwerte R so weit wie möglich erreichen.

Die zweiten Zielgrößen Z2 bilden - analog zu den ersten Zielgrößen Z1 - ebenfalls ein Subset der Zielgrößen Z. Sie sind disjunkt zu den ersten Zielgrößen Z1. In der Regel ergänzen sie sich mit den ersten Zielgrößen Z1 zu den Zielgrößen Z, sind also komplementär zu den ersten Zielgrößen Z1.

In einem Schritt S7 gibt der Rechner 9 die ermittelten Sollwerte S aus. Es ist möglich, dass die Ausgabe an die Bedienperson 13 erfolgt. Alternativ oder zusätzlich ist es möglich, dass die Ausgabe an die Steuereinrichtung 2 erfolgt, insbesondere an die technologische Prozesssteuerung 8.

Das erfindungsgemäße Optimierungsverfahren kann auf verschiedene Art und Weise ausgestaltet werden. Nachfolgend werden mögliche Ausgestaltungen erläutert.

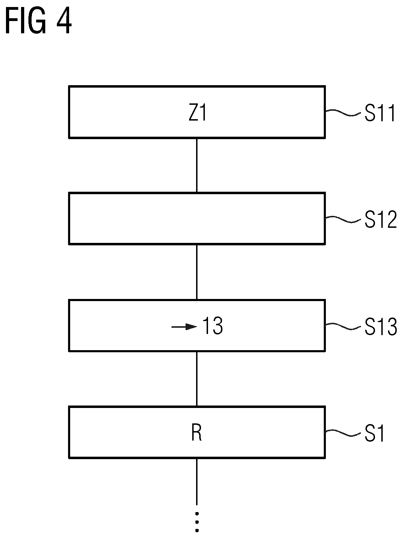

Gemäß FIG 4 führt der Rechner 9 vor dem Schritt S1 Schritte S11 bis S13 aus, wobei der Schritt S12 nur optional ist. Im Schritt S11 nimmt der Rechner 9 von der Bedienperson 13 die ersten Zielgrößen Z1 als solche entgegen. Die Bedienperson 13 gibt dem Rechner 9 also vor, für welche ersten Zielgrößen Z1 die Referenzwerte R bestimmt sein sollen. Im einfachsten Fall wählt die Bedienperson 13 nur eine einzige erste Zielgröße Z1 aus. Alternativ kann die Bedienperson 13 auch mehrere erste Zielgrößen Z1 auswählen. In diesem Fall sollte die Bedienperson 13 zusätzlich auch mit angeben, wie die einzelnen ersten Zielgrößen Z1 gewichtet werden sollen. Im Schritt S12 ermittelt der Rechner 9 auftretende Wertebereiche für die ersten Zielgrößen Z1. Diese Ermittlung erfolgt anhand der Datensätze D. Beispielsweise können für eine jeweilige, im Schritt S11 vorgegebene erste Zielgröße Z1 der minimale und der maximale Wert ermittelt werden. Auch Abwandlungen sind sinnvoll, insbesondere dann, wenn einige der größten und/oder einige der kleinsten auftretenden Werte bei der Ermittlung des Wertebereichs ausgeschlossen werden. Im Schritt S13 gibt der Rechner 9 die auftretenden Wertebereiche an die Bedienperson 13 aus.

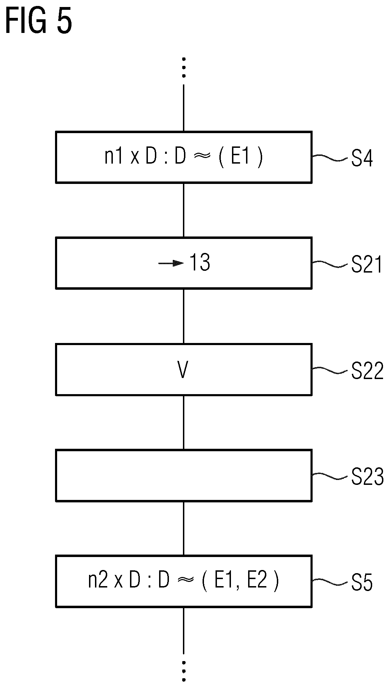

Alternativ oder zusätzlich kann der Rechner 9 gemäß FIG 5 zwischen den Schritten S4 und S5 Schritte S21 bis S23 ausführen. Im Schritt S21 gibt der Rechner 9 zumindest die ersten Istgrößen I1 der ersten Anzahl n1 von Datensätzen D an die Bedienperson 13 aus. Im Schritt S22 nimmt der Rechner 9 Vorgaben V der Bedienperson 13 entgegen. Die Vorgaben V bauen auf der Ausgabe des Schrittes S21 auf. Aufgrund der Vorgaben V eliminiert der Rechner 9 im Schritt S23 einzelne Datensätze D aus der ersten Anzahl n1 von Datensätzen D. Die eliminierten Datensätze D bleiben im Schritt S5 bei der Ermittlung der endgültig ausgewählten Datensätze D unberücksichtigt. Die eliminierten Datensätze D sind also in der zweiten Anzahl n2 an endgültig ausgewählten Datensätzen D nicht enthalten.

Weiterhin ist es möglich, dass der Rechner 9 die Sollwerte S im Rahmen einer mehrmaligen Iteration der erfindungsgemäßen Vorgehensweise ermittelt. Beispielsweise kann der Rechner 9 einen zweiten und gegebenenfalls auch einen dritten Durchlauf durch die Schritte S3 bis S5 durchführen. Im Rahmen der zweiten und gegebenenfalls auch der dritten Abarbeitung der Schritte S3 und S4 können den dortigen Ermittlungen als erste Erwartungswerte E1 die ersten Istgrößen I1 desjenigen Datensatzes D zu Grunde gelegt werden, bei dem die ersten Zielgrößen Z1 den minimalen Abstand zu den Referenzwerten R aufweisen. Auch kann der Rechner 9 gewichtete oder ungewichtete Mittelwerte der ersten Istgrößen I1 der zweiten Anzahl n2 an endgültig ausgewählten Datensätzen D ermitteln und diese Werte als erste Erwartungswerte E1 übernehmen. Dadurch kann eine noch weitergehende Optimierung erreicht werden, also beispielsweise können noch Mehrkosten oder Energie gespart werden oder die Qualität oder die Produktivität noch weiter maximiert werden.

Die vorliegende Erfindung weist viele Vorteile auf. Aufgrund der Nutzung umfangreicher Betriebsdaten der Anlage 1 können verbesserte Betriebsweisen als im Stand der Technik ermittelt werden. Aufgrund der zweistufigen Vorgehensweise bei der Ermittlung der Datensätze D, also zuerst unter Verwertung nur der ersten Istgrößen I1 zur Ermittlung der ersten Anzahl n1 an Datensätzen D und sodann unter Verwertung auch der zweiten Istgrößen I2 zur Ermittlung der zweiten Anzahl n2 an Datensätzen D) kann der Aufwand zur Ermittlung derjenigen Datensätze D, anhand derer die Sollwerte S ermittelt werden, in vernünftigen Grenzen gehalten werden. Im Ergebnis kann der technische Prozess schneller und nachhaltiger als im Stand der Technik optimiert werden. Bereits in der Basisausgestaltung gemäß FIG 3, insbesondere aber in der Ausgestaltung gemäß FIG 4, kann innerhalb kürzester Zeit auf geänderte Anforderungen reagiert werden.

### Bezugszeichenliste

- 1: Anlage
- 2: Steuereinrichtung
- 3: Eingangsstoffe
- 4: Energie
- 5: Ausgangsprodukt
- 6: Nebenprodukte
- 7: Prozessregelungen
- 8: technologische Prozesssteuerung
- 9: Rechner
- 10: Datenpool
- 11: Computerprogramm
- 12: Maschinencode
- 13: Bedienperson
- 14: Modell

- D: Datensätze
- E1, E2: Erwartungswerte
- I1, I2: Istgrößen
- n1, n2: Anzahlen
- R: Referenzwerte
- S: Sollwerte
- S1 bis S23: Schritte
- V: Vorgaben
- Z, Z', Z", Z1, Z2: Zielgrößen

## Patentansprüche

1. Von einem Rechner (9) ausgeführtes Optimierungsverfahren für den Betrieb einer Anlage (1) der Grundstoffindustrie, insbesondere einer Anlage der Stahl- oder Aluminiumindustrie, mittels derer zyklisch immer wieder ein technischer Prozess ausgeführt wird,
a) wobei der Rechner (9) anhand vorgegebener Referenzwerte (R) für erste Zielgrößen (Z1) des technischen Prozesses unter Verwertung eines Modells (14) der Anlage (1) und des technischen Prozesses erste Erwartungswerte (E1) für erste Istgrößen (I1) des technischen Prozesses ermittelt, so dass die ersten Zielgrößen (Z1) die Referenzwerte (R) so weit wie möglich erreichen,
b) wobei der Rechner (9) aus einer Vielzahl von dem Rechner (9) bekannten Datensätzen (D), die für jeweils einen einzelnen Zyklus des technischen Prozesses die ersten Zielgrößen (Z1) und zweite Zielgrößen (Z2), die ersten Istgrößen (I1) und zweite Istgrößen (I2) umfassen, gemäß einem vorbestimmten ersten Abstandskriterium eine vorbestimmte erste Anzahl (n1) von Datensätzen (D) vorläufig auswählt, bei denen die ersten Istgrößen (I1) einen möglichst geringen Abstand zu den ersten Erwartungswerten (E1) aufweisen,
c) wobei die ersten Zielgrößen (Z1) disjunkt zu den zweiten Zielgrößen (Z2) und die ersten Istgrößen (I1) disjunkt zu den zweiten Istgrößen (I2) sind,
d) wobei der Rechner (9) anhand der vorgegebenen Referenzwerte (R) für die ersten Zielgrößen (Z1) und der ersten Erwartungswerte (E1) zweite Erwartungswerte (E2) für die zweiten Istgrößen (I2) ermittelt,
e) wobei der Rechner (9) aus den vorläufig ausgewählten Datensätzen (D) gemäß einem vorbestimmten zweiten Abstandskriterium eine vorbestimmte zweite Anzahl (n2) von Datensätzen (D) endgültig auswählt, bei denen die ersten Istgrößen (I1) und die zweiten Istgrößen (I2) einen möglichst geringen Abstand zu den ersten und zweiten Erwartungswerten (E1, E2) aufweisen,
f) wobei der Rechner (9) anhand der endgültig ausgewählten Datensätze (D) für einen noch auszuführenden Zyklus des technischen Prozesses Sollwerte (S) für die zweiten Zielgrößen (Z2) ermittelt, so dass die ersten Zielgrößen (Z1) die Referenzwerte (R) so weit wie möglich erreichen, und
g) wobei der Rechner (9) die ermittelten Sollwerte (S) an eine Bedienperson (13) oder eine Steuereinrichtung (2) der Anlage (1) der Grundstoffindustrie ausgibt,
wobei bezüglich der ersten Erwartungswerte der Begriff "Erwartungswert" in dem Sinne gemeint ist, dass der entsprechende Wert angestrebt oder eingestellt werden muss, um die ersten Zielgrößen auf die Referenzwerte einstellen zu können.

2. Optimierungsverfahren nach Anspruch 1,
**dadurch gekennzeichnet,**
**dass** der Rechner (9) die Referenzwerte (R) von der Bedienperson (13) entgegennimmt.

3. Optimierungsverfahren nach Anspruch 2,
**dadurch gekennzeichnet,**
**dass** der Rechner (9) zunächst von der Bedienperson (13) eine Auswahl der ersten Zielgrößen (Z1) als solche entgegennimmt und erst danach von der Bedienperson (13) die Referenzwerte (R) für die ersten Zielgrößen (Z1) entgegennimmt.

4. Optimierungsverfahren nach Anspruch 3,
**dadurch gekennzeichnet,**
**dass** der Rechner (9) zwischen dem Entgegennehmen der Auswahl der ersten Zielgrößen (Z1) als solche und dem Entgegennehmen der Referenzwerte (R) für die ersten Zielgrößen (Z1) anhand der Datensätze (D) auftretende Wertebereiche für die ersten Zielgrößen (Z1) ermittelt und die auftretenden Wertebereiche an die Bedienperson (13) ausgibt.

5. Optimierungsverfahren nach einem der obigen Ansprüche,
**dadurch gekennzeichnet,**
**dass** der Rechner (9) zumindest die ersten Istgrößen (I1) der ersten Anzahl (n1) von Datensätzen (D) an die Bedienperson (13) ausgibt und dass der Rechner (9) aufgrund von darauf aufbauenden Vorgaben der Bedienperson (13) aus der ersten Anzahl (n1) von Datensätzen (D) einzelne Datensätze (D) eliminiert, so dass die eliminierten Datensätze (D) bei der Ermittlung der endgültig ausgewählten Datensätze (D) unberücksichtigt bleiben.

6. Optimierungsverfahren nach einem der obigen Ansprüche,
**dadurch gekennzeichnet,**
**dass** der Rechner (9) nach der erstmaligen Ausführung des Schrittes e) erneut die Schritte b) bis e) ausführt, wobei der Rechner (9) der erneuten Ausführung der Schritte b) bis e) als erste Erwartungswerte (E1) die ersten Istgrößen (I1) desjenigen Datensatzes (D) der zweiten Anzahl (n2) an Datensätzen (D) zu Grunde legt, die bei der bereits erfolgten Ausführung des Schrittes e) den geringsten Abstand zu den ersten Erwartungswerten (E1) aufgewiesen haben.

7. Computerprogramm, das Maschinencode (12) umfasst, der von einem Rechner (9) abarbeitbar ist, wobei die Abarbeitung des Maschinencodes (12) durch den Rechner (9) bewirkt, dass der Rechner (9) ein Optimierungsverfahren nach einem der obigen Ansprüche ausführt.

8. Rechner, der mit einem Computerprogramm (11) nach Anspruch 7 programmiert ist, so dass er im Betrieb ein Optimierungsverfahren nach einem der Ansprüche 1 bis 6 ausführt.

## Claims

1. Optimization method, executed by a computer (9), for the operation of a plant (1) in the basic-materials industry, in particular a plant in the steel industry or aluminium industry, by means of which a technical process is executed cyclically, time and time again,
a) wherein, by utilizing a model (14) of the plant (1) and of the technical process, the computer (9) ascertains on the basis of specified reference values (R) for first target variables (Z1) of the technical process first expected values (E1) for first actual variables (I1) of the technical process, so that the first target variables (Z1) attain the reference values (R) as far as possible,
b) wherein, from a large number of data records (D) known to the computer (9), which comprise - in each instance for a single cycle of the technical process - the first target variables (Z1) and second target variables (Z2), the first actual variables (I1) and second actual variables (I2), the computer (9) provisionally selects, in accordance with a predetermined first distance criterion, a predetermined first number (n1) of data records (D) in which the first actual variables (I1) display a distance from the first expected values (E1) that is as small as possible,
c) wherein the first target variables (Z1) are disjunct from the second target variables (Z2) and the first actual variables (I1) are disjunct from the second actual variables (I2),
d) wherein, on the basis of the specified reference values (R) for the first target variables (Z1) and on the basis of the first expected values (E1), the computer (9) ascertains second expected values (E2) for the second actual variables (I2),
e) wherein, from the provisionally selected data records (D), the computer (9) definitively selects, in accordance with a predetermined second distance criterion, a predetermined second number (n2) of data records (D) in which the first actual variables (I1) and the second actual variables (I2) display a distance from the first and second expected values (E1, E2) that is as small as possible,
f) wherein, on the basis of the definitively selected data records (D) for a cycle of the technical process that is yet to be executed, the computer (9) ascertains set values (S) for the second target variables (Z2), so that the first target variables (Z1) attain the reference values (R) as far as possible, and
g) wherein the computer (9) outputs the ascertained set values (S) to an operator (13) or to a control device (2) of the plant (1) in the basic-materials industry,
wherein, with respect to the first expected values, the term "expected value" is meant in the sense that the corresponding value has to be striven for or set, in order to be able to set the first target variables to the reference values.

2. Optimization method according to Claim 1,
**characterized**
**in that** the computer (9) accepts the reference values (R) from the operator (13).

3. Optimization method according to Claim 2,
**characterized**
**in that** the computer (9) firstly accepts a selection of the first target variables (Z1) as such from the operator (13) and only then accepts the reference values (R) for the first target variables (Z1) from the operator (13).

4. Optimization method according to Claim 3,
**characterized**
**in that**, between accepting the selection of the first target variables (Z1) as such and accepting the reference values (R) for the first target variables (Z1), the computer (9) ascertains ranges of values, arising on the basis of the data records (D), for the first target variables (Z1), and outputs the ranges of values arising to the operator (13).

5. Optimization method according to one of the above claims, **characterized**
**in that** the computer (9) outputs at least the first actual variables (I1) of the first number (n1) of data records (D) to the operator (13) and in that the computer (9) eliminates individual data records (D) from the first number (n1) of data records (D) on the basis of specifications, based on this output, provided by the operator (13), so that the eliminated data records (D) are disregarded in the course of ascertaining the definitively selected data records (D).

6. Optimization method according to one of the above claims, **characterized**
**in that** the computer (9) executes steps b) to e) again after the first-time execution of step e), wherein the computer (9) bases the renewed execution of steps b) to e) upon the first actual variables (I1), as first expected values (E1), of that data record (D) of the second number (n2) of data records (d) which have displayed the smallest distance from the first expected values (E1) in the course of the execution of step e) which has already taken place.

7. Computer program which comprises machine code (12) which is capable of being processed by a computer (9), the processing of the machine code (12) by the computer (9) having the effect that the computer (9) executes an optimization method according to one of the above claims.

8. Computer that has been programmed with a computer program (11) according to Claim 7, so that in operation it executes an optimization method according to one of Claims 1 to 6.

## Revendications

1. Procédé d'optimisation exécuté par un ordinateur (9) pour le fonctionnement d'une installation (1) de l'industrie de base, en particulier d'une installation de l'industrie sidérurgique ou de l'aluminium au moyen de laquelle un processus technique est exécuté sans cesse de manière cyclique,
a) dans lequel l'ordinateur (9) détermine, à l'aide de valeurs de référence (R) prédéfinies pour de premières grandeurs cibles (Z1) du processus technique par utilisation d'un modèle (14) de l'installation (1) et du processus technique, de premières valeurs attendues (E1) pour de premières grandeurs réelles (I1) du processus technique, de sorte que les premières grandeurs cibles (Z1) atteignent autant que possible les valeurs de référence (R),
b) dans lequel l'ordinateur (9), à partir d'une pluralité d'ensembles de données (D) connus de l'ordinateur (9), lesquels comportent pour respectivement un cycle individuel du processus technique les premières grandeurs cibles (Z1) et deuxièmes grandeurs cibles (Z2), les premières grandeurs réelles (I1) et deuxièmes grandeurs réelles (I2), sélectionne provisoirement, selon un premier critère de distance prédéterminé, une première quantité (n1) prédéterminée d'ensembles de données (D) dans lesquels les premières grandeurs réelles (I1) sont espacées d'une distance la plus petite possible des premières valeurs attendues (E1),
c) dans lequel les premières grandeurs cibles (Z1) sont disjointes des deuxièmes grandeurs cibles (Z2) et les premières grandeurs réelles (I1) sont disjointes des deuxièmes grandeurs réelles (I2),
d) dans lequel l'ordinateur (9), à l'aide des valeurs de référence (R) prédéfinies pour les premières grandeurs cibles (Z1) et des premières valeurs attendues (E1), détermine des deuxièmes valeurs attendues (E2) pour les deuxièmes grandeurs réelles (I2),
e) dans lequel l'ordinateur (9), à partir des ensembles de données (D) sélectionnés provisoirement, sélectionne définitivement, selon un deuxième critère de distance prédéterminé, une deuxième quantité (n2) prédéterminée d'ensembles de données (D) dans lesquels les premières grandeurs réelles (I1) et les deuxièmes grandeurs réelles (I2) sont espacées d'une distance la plus petite possible des premières et deuxièmes valeurs attendues (E1, E2),
f) dans lequel l'ordinateur (9), à l'aide des ensembles de données (D) sélectionnés définitivement pour un cycle restant encore à exécuter du processus technique, détermine des valeurs théoriques (S) pour les deuxièmes grandeurs cibles (Z2), de sorte que les premières grandeurs cibles (Z1) atteignent autant que possible les valeurs de référence (R), et
g) dans lequel l'ordinateur (9) émet en sortie les valeurs théoriques (S) déterminées à destination d'un opérateur (13) ou d'un dispositif de commande (2) de l'installation (1) de l'industrie de base,
dans lequel, en ce qui concerne les premières valeurs attendues, l'expression « valeur attendue » est entendue dans le sens où la valeur correspondante doit être envisagée ou réglée afin que les premières grandeurs cibles puissent être réglées aux valeurs de référence.

2. Procédé d'optimisation selon la revendication 1, **caractérisé en ce que** l'ordinateur (9) reçoit les valeurs de référence (R) en provenance de l'opérateur (13).

3. Procédé d'optimisation selon la revendication 2, **caractérisé en ce que** l'ordinateur (9) reçoit tout d'abord une sélection des premières grandeurs cibles (Z1) en tant que telle en provenance de l'opérateur (13), et seulement ensuite reçoit les valeurs de référence (R) pour les premières grandeurs cibles (Z1) en provenance de l'opérateur (13).

4. Procédé d'optimisation selon la revendication 3, **caractérisé en ce que** l'ordinateur (9), entre la réception de la sélection des premières grandeurs cibles (Z1) en tant que telle et la réception des valeurs de référence (R) pour les premières grandeurs cibles (Z1), à l'aide des ensembles de données (D), détermine des plages de valeurs rencontrées pour les premières grandeurs cibles (Z1) et émet en sortie les plages de valeurs rencontrées à destination de l'opérateur (13).

5. Procédé d'optimisation selon l'une des revendications précédentes, **caractérisé en ce que** l'ordinateur (9) émet en sortie au moins les premières grandeurs réelles (I1) de la première quantité (n1) d'ensembles de données (D) à destination de l'opérateur (13) et **en ce que** l'ordinateur (9), sur la base de spécifications de l'opérateur (13) fondées sur celles-ci, élimine des ensembles de données (D) individuels de la première quantité (n1) d'ensembles de données (D), de sorte que les ensembles de données (D) éliminés demeurent non pris en considération lors de la détermination des ensembles de données (D) sélectionnés définitivement.

6. Procédé d'optimisation selon l'une des revendications précédentes, **caractérisé en ce que** l'ordinateur (9), après la première exécution de l'étape e), exécute une nouvelle fois les étapes b) à e), dans lequel l'ordinateur (9) base la nouvelle exécution des étapes b) à e) sur les premières grandeurs réelles (I1), en tant que premières valeurs attendues (El), de chaque ensemble de données (D) de la deuxième quantité (n2) d'ensembles de données (D) qui ont présenté la plus petite distance par rapport aux premières valeurs attendues (El) au cours de l'exécution déjà effectuée de l'étape e).

7. Produit de programme informatique comportant un code machine (12), lequel peut être traité par un ordinateur (9), dans lequel le traitement du code machine (12) par l'ordinateur (9) a pour effet que l'ordinateur (9) exécute un procédé d'optimisation selon l'une des revendications précédentes.

8. Ordinateur qui est programmé avec un produit de programme informatique (11) selon la revendication 7, de sorte qu'il exécute en cours de fonctionnement un procédé d'optimisation selon l'une des revendications 1 à 6.
